# EUROPÄISCHE PATENTSCHRIFT

(11) **EP 0 612 402 B1**
(45) Veröffentlichungstag und Bekanntmachung des Hinweises auf die Patenterteilung: **07.06.1995**
(21) Anmeldenummer: 92921377.5
(22) Anmeldetag: 16.10.1992
(51) Int. Cl.: G01L 9/06, G01L 23/10

(54) **SILIZIUM-CHIP ZUR VERWENDUNG IN EINEM KRAFTSENSOR**
SILICON CHIP FOR USE IN A FORCE-DETECTION SENSOR
PUCE DE SILICIUM UTILISABLE DANS UN CAPTEUR DE FORCE

(30) Priorität: 15.11.1991 DE 4137624
(43) Veröffentlichungstag der Anmeldung: 31.08.1994
(73) Patentinhaber: ROBERT BOSCH GMBH, 70442 Stuttgart (DE)
(72) Erfinder: HERDEN, Werner, D-7016 Gerlingen (DE); MAREK, Jiri, D-7410 Reutlingen 22 (DE); WEIBLEN, Kurt, D-7430 Metzingen 2 (DE); BANTIEN, Frank, D-7257 Ditzingen (DE); KUESELL, Matthias, D-7014 Kornwestheim (DE); SCHMIDT, Steffen, D-7410 Reutlingen 11 (DE)
(86) Internationale Anmeldenummer: DE9200870
(87) Internationale Veröffentlichungsnummer: WO9310430

(56) Entgegenhaltungen:
- EP-A- 0 342 274
- EP-A- 0 427 261
- EP-A- 0 454 901
- WO-A-92/15851
- DE-A- 4 009 377
- DE-C- 3 419 710
- DE-C- 3 702 412
- GB-A- 2 207 804
- US-A- 4 129 042
- US-A- 4 966 039
- Patent Abstracts of Japan, Band 8, Nr. 65 (P-263) & JP-A-58 211 615

## Beschreibung

### Stand der Technik

Die Erfindung geht aus von einem Silizium-Chip zur Verwendung in einem Kraftsensor nach der Gattung des Hauptanspruchs. Aus der deutschen Patentanmeldung 41 061 020 (WO-A1-92-15851 veröffentlicht 17,9,1992 (EP-A1-526 600)) sind bereits Silizium-Chips zur Verwendung in Kraftsensoren, insbesondere zur Druckerfassung im Brennraum von Brennkraftmaschinen, bekannt, bei denen die Kraft durch einen Stempel auf den Silizium-Chip geleitet wird. Der Silizium-Chip enthält piezoresistive Elemente, die ihren Widerstand unter Krafteinwirkung verändern. Die Signale dieser piezoresistiven Elemente werden von ebenfalls auf dem Chip vorhandenen Schaltkreisen vorverarbeitet und durch Zuleitungen an andere Schaltkreise außerhalb des Chips weitergegeben. Bei diesen Silizium-Chips sind keine Maßnahmen vorgesehen, die die Schaltkreise vor dem störenden Einfluß von mechanischen Verspannungen schützen.

### Vorteile der Erfindung

Die erfindungsgemäßen Silizium-Chips mit den kennzeichnenden Merkmalen des Hauptanspruchs haben demgegenüber den Vorteil, daß die piezoresistiven Elemente in einem Bereich großer mechanischer Spannung und die Schaltkreise in einem Bereich geringer mechanischer Spannung angeordnet sind. Durch diese Anordnung wird das Signal der piezoresistiven Elemente maximiert und die Störungen der Schaltkreise minimiert.

Durch die in den Unteransprüchen aufgeführten Maßnahmen sind vorteilhafte Weiterbildungen und Verbesserungen des im Hauptanspruch angegebenen Silizium-Chips möglich. Durch die Anordnung von vier piezoresistiven Elementen um den Krafteinleitungsbereich herum, von denen zwei mit ihrer Längsrichtung zum Krafteinleitungsbereich hin und zwei quer dazu orientiert sind, wird die Auswertung der Signale der piezoresistiven Elemente beispielsweise durch eine Brückenschaltung besonders vereinfacht. Die Verwendung von zwei piezoresistiven Elementen gleicher Orientierung im Krafteinleitungsbereich ist besonders platzsparend. Für unsymmetrische Ausgestaltungen des Silizium-Chips ist es vorteilhaft, vier piezoresistive Elemente auf einer Meßlinie anzuordnen, wobei zwei mit ihrer Längsrichtung auf der Meßlinie und zwei quer dazu orientiert sind, da so wieder eine Brückenschaltung mit vier piezoresitiven Elementen bei gleichzeitiger Anordnung im Bereich höchster mechanischer Spannung möglich ist. Die einfachste Ausgestaltung des erfindungsgemäßen Silizium-Chips besteht aus einem massiven Stück Silizium mit dem Krafteinleitungsbereich in der Mitte und den Schaltkreisen am Rand des Chips. Durch Einbringen von Gräben in der Oberseite des Silizium-Chips zwischen dem Krafteinleitungsbereich und den Schaltkreisen werden die Schaltkreise besonders effektiv von den mechanischen Spannungen des Krafteinleitungsbereichs abgekoppelt. Bei Strukturierung der Unterseite des Silizium-Chips werden die Schaltkreise auf der Oberseite des Silizium-Chips weniger stark durch die Ätzprozesse zum Einbringen der Gräben belastet. Wenn dabei nur ein dem Krafteinleitungsbereich gegenüberliegender Bereich auf dem Gegenlager aufliegt, so werden die Schaltkreise besonders gut mechanisch vom Krafteinleitungsbereich entkoppelt. Wenn der Krafteinleitungsbereich auf der Unterseite des Silizium-Chips von einem Graben umgeben wird, so werden die Schaltkreise mechanisch vom Krafteinleitungsbereich entkoppelt. Da sie jedoch noch in Kontakt zum Gegenlager stehen, wird die in den Schaltkreisen entstehende Wärme gut über das Gegenlager abgeleitet. Zur Vergrößerung der Spannungskonzentration im Bereich der piezoresistiven Elemente, kann diese Struktur noch mit einer Ausnehmung in der Mitte des vom Graben umgebenen Bereichs versehen werden. Durch eine unsymmetrische Anordnung bei der nur ein am Rand gelegener Bereich des Silizium-Chips mit dem Gegenlager verbunden ist, werden mechanische Spannungen zwischen dem Silizium-Chip und dem Gegenlager verringert. Durch Einbringen eines Grabens, der den Krafteinleitungsbereich auf der Unterseite des Silizium-Chips mit ca. 270° umfaßt und eine Ausnehmung im umfaßten Bereich des Grabens, wird der durch die eingebrachte Kraft verformte Bereich des Silizium-Chips im wesentlichen als Biegebalken mit einseitiger Einspannung ausgestaltet. Entsprechend wird durch Einbringen von zwei parallelen Gräben und Verringerung der Dicke zwischen diesen Gräben der verformte Bereich des Silizium-Chips als Biegebalken mit beidseitiger Einspannung ausgeführt. Die mechanischen Spannungen am Ende dieser Biegebalken beim Einbringen einer Kraft auf den Biegebalken sind besonders einfach berechenbar und ermöglichen so eine exakte Vorhersage des Verhaltens des Silizium-Chips.

### Zeichnungen

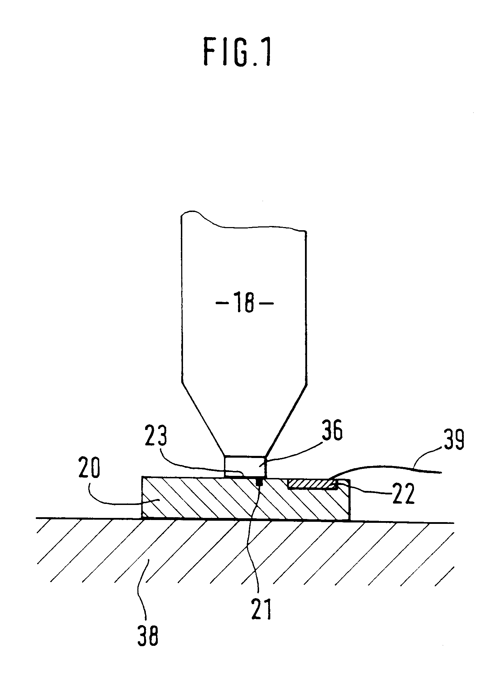

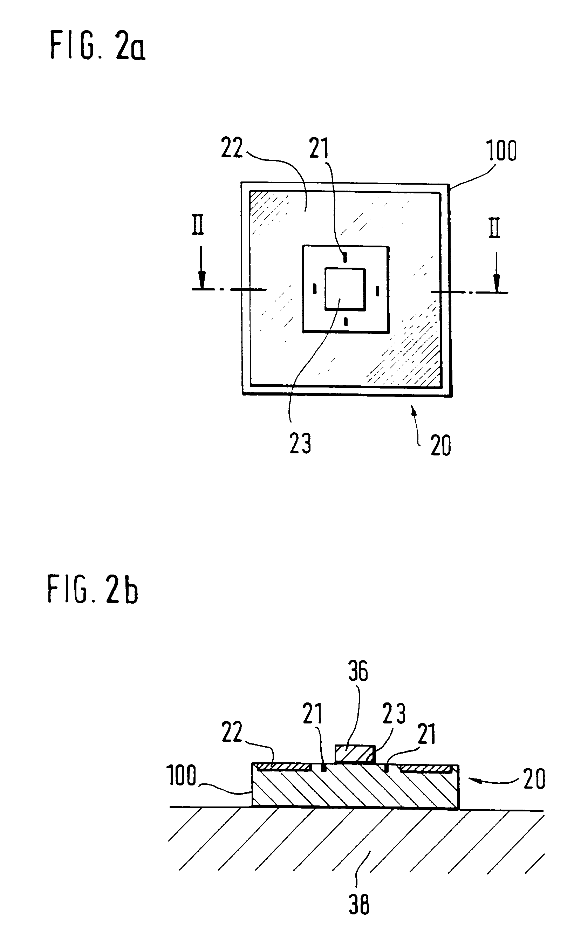

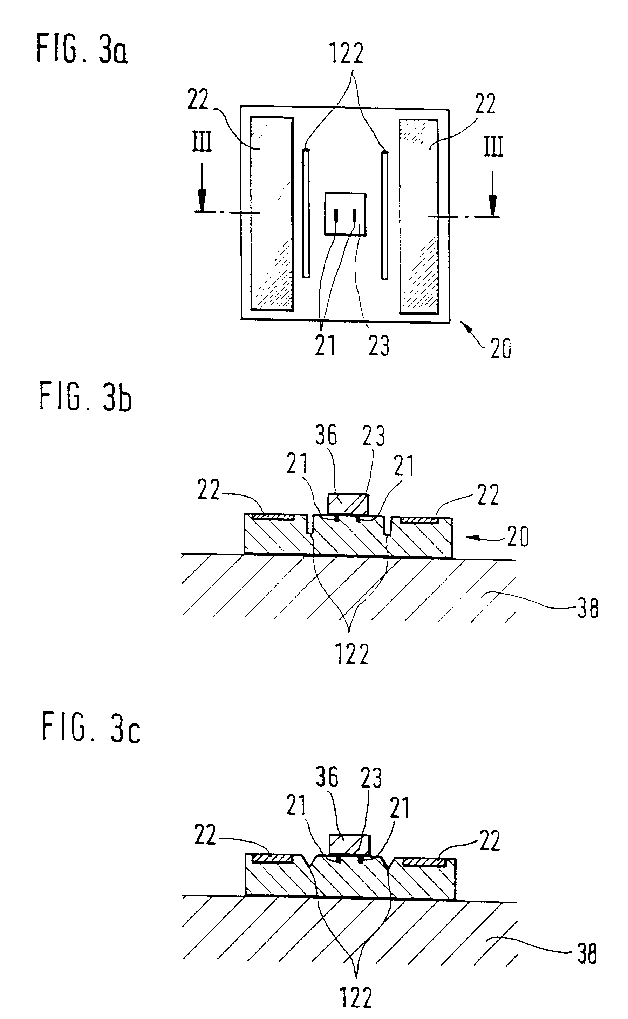

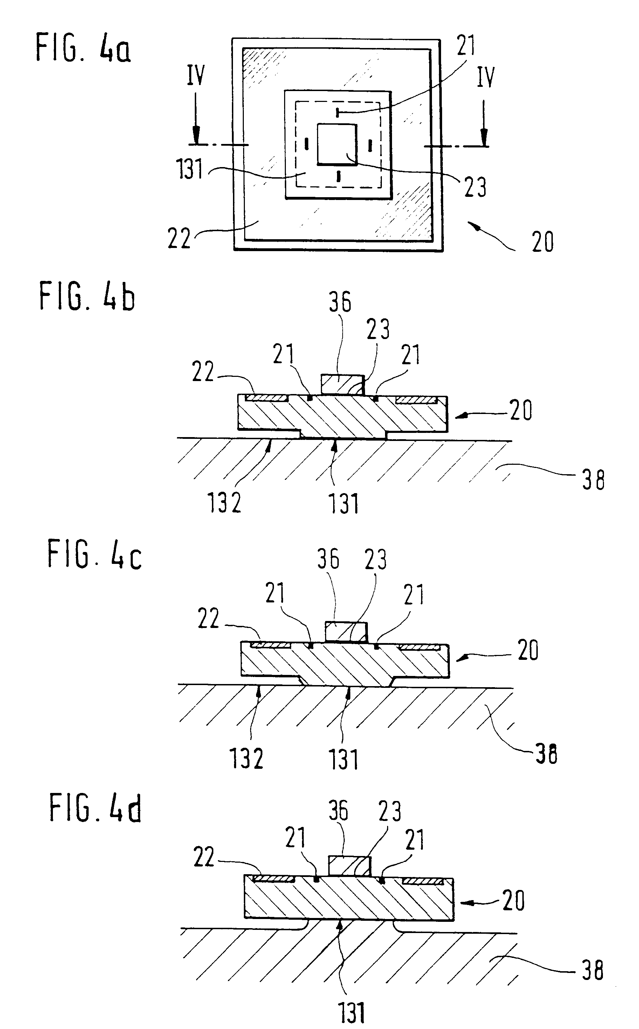

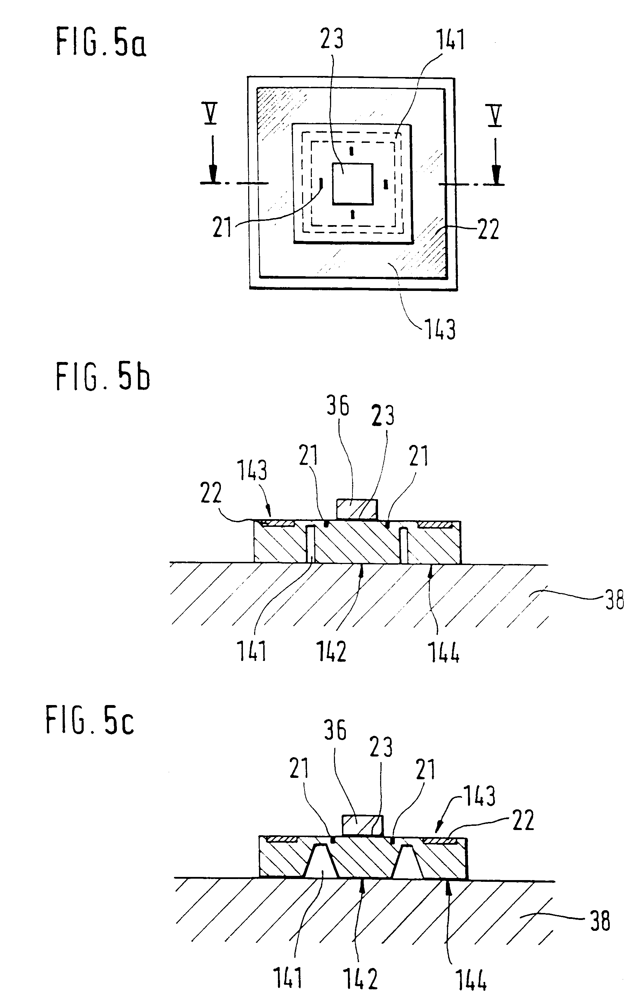

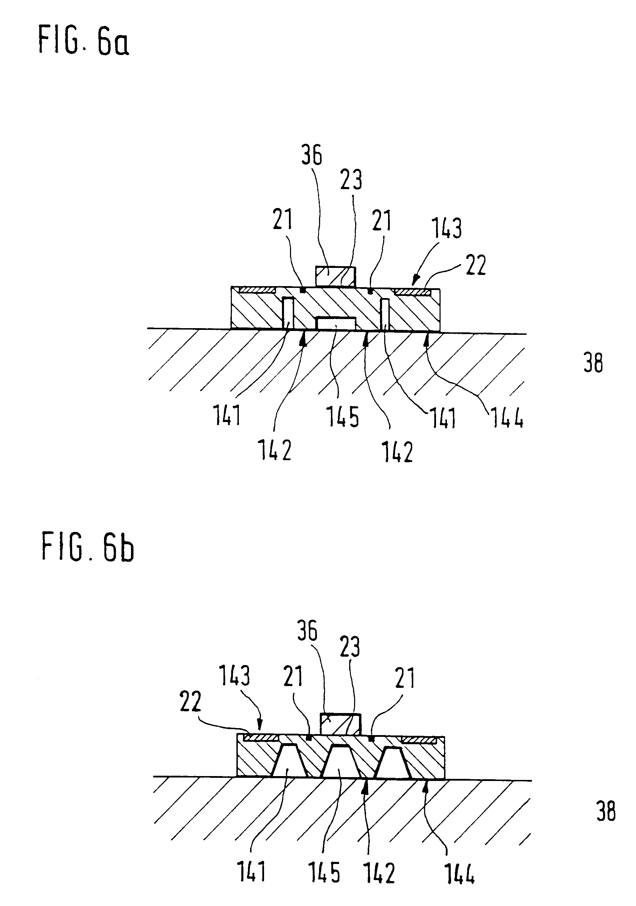

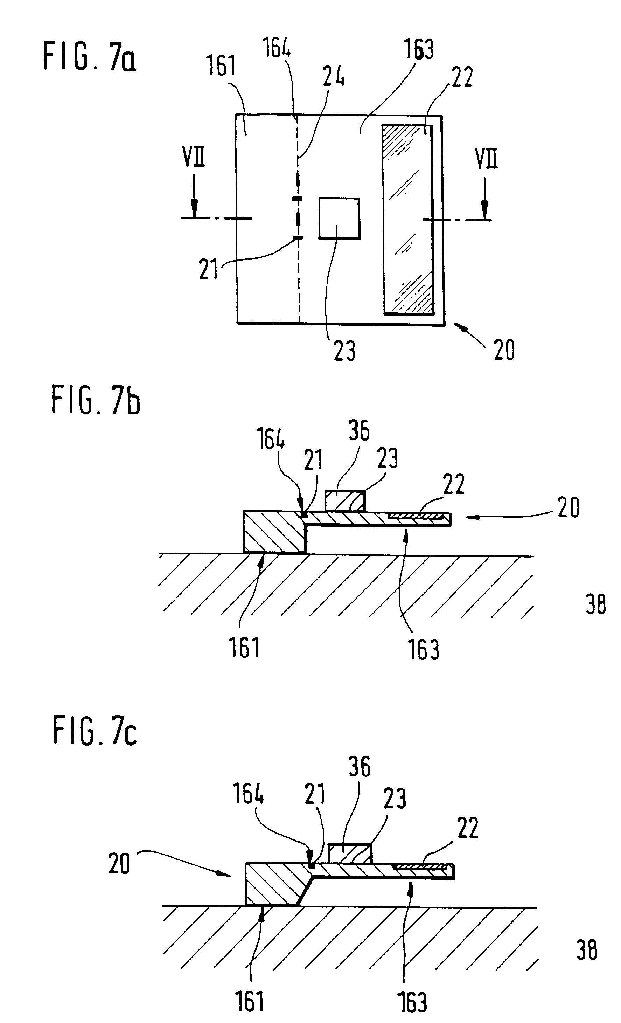

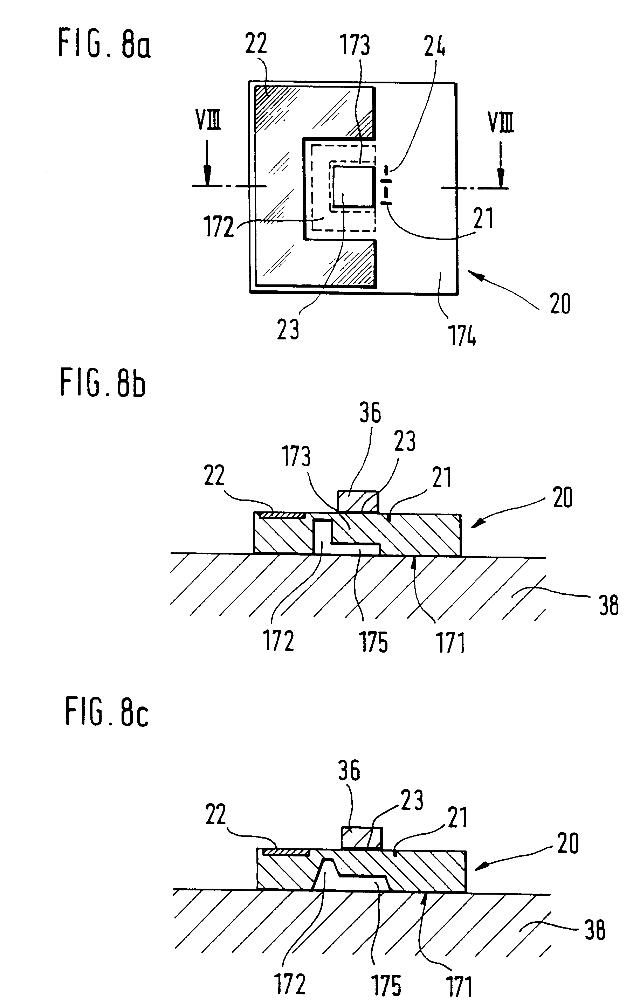

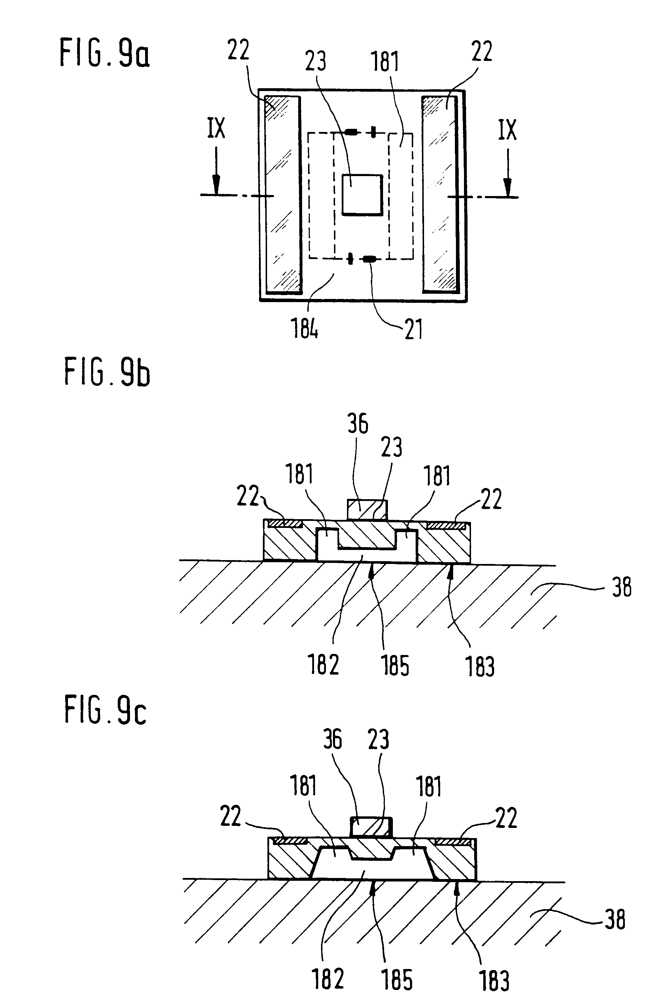

Ausführungsbeispiele der Erfindung sind in den Zeichnungen dargestellt und in der nachfolgenden Beschreibung näher erläutert. Es zeigen Figur 1 den erfindungsgemäßen Silizium-Chip bei der Verwendung in einem Kraftsensor, Figur 2 Aufsicht und Querschnitt einer Ausführungsform des Silizium-Chips, Figur 3 einen Silizium-Chip mit auf der Oberfläche eingebrachten Gräben, Figur 4 einen Silizium-Chip der nur auf einem dem Krafteinleitungsbereich gegenüberliegenden Bereich auf dem Gegenlager aufliegt, Figur 5 einen Silizium-Chip mit einem in die Unterseite eingebrachten Graben, der den Krafteinleitungsbereich umfaßt, Figur 6 einen Silizium-Chip nach Figur 5 mit einer zusätzlichen Ausnehmung auf der Unterseite, Figur 7 einen Silizium-Chip der nur in einem Randbereich mit dem Gegenlager verbunden ist, Figur 8 die Ausgestaltung als einseitig eingespannter Biegebalken und Figur 9 die Ausgestaltung als zweiseitig eingespannter Biegebalken.

### Beschreibung der Ausführungsbeispiele

Figur 1 zeigt die Anwendung des erfindungsgemäßen Silizium-Chips in einem Kraftsensor, wie sie beispielsweise in der nachveröffentlichten deutschen Patentanmeldung 41 061 020 für einen Brennraumdrucksensor beschrieben wird. Der Silizium-Chip 20 ist auf einem Gegenlager 38 angeordnet. Die Kraft wird über einen Stempel 18 und ein Zwischenelement 36 auf den Silizium-Chip 20 gebracht. Mit 23 ist der Krafteinleitungsbereich, d.h. der Bereich des Chips der direkt unterhalb dem Zwischenstück 36 gelegen ist, bezeichnet. Das Zwischenstück 36 ist nicht zwingend erforderlich, ebensogut kann der Stempel 18 direkt auf den Silizium-Chip wirken. Das Zwischenstück 36 wurde jedoch in allen weiteren Figuren übernommen, um deutlich darzustellen, in welchem Bereich die Kraft in den Silizium-Chip 20 eingeleitet wird. Weiterhin ist der Silizium-Chip mit piezoresistiven Elementen 21 und Schaltkreisen 22 versehen. Die exakte Anordnung der piezoresistiven Elemente 21 und der Schaltkreise 22 ist wesentlicher Bestandteil der Erfindung und wird in den Figuren 2 bis 9 näher erläutert. Über die Bonddrähte 39 wird ein elektrischer Anschluß zu hier nicht gezeigten außerhalb des Chips liegenden Schaltkreisen hergestellt. Die in Figur 1 gezeigte Anordnung ist in ein Gehäuse eingebaut, deren Ausgestaltung beispielsweise in der obengenannten Anmeldung beschrieben wird.

Alle weiteren Figuren weisen ein Zwischenstück 36, einen darunter liegenden Krafteinleitungsbereich 23, piezoresistive Elemente 21 und Schaltkreise 22 auf. Aus Gründen der Vereinfachung sind die Bonddrähte 39 und der Stempel 18 jeweils nicht gezeigt. Die piezoresistiven Elemente 21 sind beispielsweise durch Diffusionsprozesse im Material des Silizium-Chips 20 erzeugt. Durch eine mechanische Deformation des Siliziums wird der Widerstand dieser diffundierten Bereiche verändert. Diese Widerstandsänderung kann beispielsweise durch metallische Anschlußbahnen an den piezoresistiven Elementen 21 nachgewiesen werden. Aufgrund ihrer Kontaktierung weisen die piezoresistiven Elemente 21 eine Längsrichtung auf. Diese Längsrichtung muß bei der Anordnung der piezoresistiven Elemente 21 auf der Oberfläche des Silizium-Chips 20 berücksichtigt werden, da der piezoresistive Koeffizient von Silizium von der Kristallrichtung abhängt. Die genaue Ausgestaltung der Schaltkreise 22 ist für den Erfindungsgedanken nicht von Belang, es wird jedoch beispielsweise an eine Brückenschaltung zur Vorauswertung der Signale der piezoresistiven Elemente 21 gedacht. Wichtig ist jedoch, daß die Schaltkreise 22 im Bereich niedriger mechanischer Spannung angeordnet werden, um so eine Beeinflussung ihres Verhaltens durch mechanische Verspannungen oder Deformationen des Materials des Silizium-Chips 20 auszuschließen.

In Figur 2 wird die einfachste Ausführungsform des erfindungsgemäßen Silizium-Chips als einstückiges Stück Silizium 100 gezeigt. In Figur 2a wird in der Aufsicht die Anordnung der vier piezoresistiven Elemente 21 um den Krafteinleitungsbereich 23 herum gezeigt. Dabei sind zwei der piezoresistiven Elemente 21 mit ihrer Längsrichtung zum Krafteinleitungsbereich 23 hin und zwei quer dazu orientiert. Die Schaltkreise 22 sind am Rand des Chips 20 angeordnet. In Figur 2b sieht man im Querschnitt, daß das Stück Silizium 100 vollständig mit dem Gegenlager 38 verbunden ist. In diesem Fall ist es vorteilhaft, die in der eingangs genannten Schrift offengelegten Materialkombinationen mit geeignetem Ausdehnungskoeffizienten zu verwenden.

In Figur 3 wird ein Silizium-Chip 20 mit auf der Oberseite eingebrachten Gräben gezeigt. Figur 3a zeigt eine Aufsicht, Figur 3b und c zeigen einen Querschnitt entlang der Linie III-III, wobei die Gräben in Figur 3b mit anderen Prozessen erzeugt wurden, als die Gräben in Figur 3c. In der Aufsicht (Figur 3a) erkennt man die piezoresistiven Elemente 21, die im Krafteinleitungsbereich 23 gelegen sind. Auf zwei Seiten des Krafteinleitungsbereichs 23 sind Gräben 122 eingebracht. Auf der vom Krafteinleitungsbereich 23 abgewandten Seite des Silizium-Chips 20 liegen die Schaltkreise 22. Wegen der Richtungsabhängigkeit des piezoresistiven Koeffizientens von Silizium sind die beiden piezoresistiven Elemente 21 in die gleiche Richtung ausgerichtet. Dies kann jede beliebige Richtung sein, sie muß nicht parallel zu den eingebrachten Gräben 122 sein, der Krafteinleitungsbereich kann beispielsweise auch rund ausgestaltet sein. Die Gräben 122 sollten in ihrer Längsrichtung deutlich länger sein, als die Ausdehnung des Krafteinleitungsbereichs 23 in dieser Richtung. In Figur 3b ist ein Querschnitt durch den Silizium-Chip entlang der Linie III-III gezeigt. Die Gräben 122 weisen einen rechteckigen Querschnitt auf. Gräben mit einem rechteckigen Querschnitt können beispielsweise durch nasschemische anisotrope Ätzprozesse in Siliziumwafern mit einer 110 Orientierung erzeugt werden. Wegen der großen Anisotropie dieser Ätzprozesse sind dabei Gräben mit einem Tiefe-zu-Breite Verhältnis in der Größenordnung von mehreren Hundert möglich. Die Lage dieser Gräben auf den Silizium-Chips ist jedoch an die Kristallstruktur des Siliziums gebunden. Unabhängig von der Kristallstruktur des Siliziums können Gräben mit überwiegend rechteckigem Querschnitt durch anisotrope Plasmaätzprozesse erzeugt werden. Das dabei erzielbare Tiefe-zu-Breite Verhältnis ist jedoch deutlich geringer als bei nasschemische Ätzprozessen. In Figur 3c wird ebenfalls ein Schnitt entlang der Linie III-III gezeigt. Die Gräben 122 weisen einen V-förmigen Querschnitt mit einem Öffnungswinkel von ca. 70,5° auf. Gräben mit diesem Querschnitt lassen sich in 100 orientierten Silizium durch nasschemische Ätzprozesse erzeugen.

Die in Figur 3 und Figur 2 gezeigten Anordnungen von piezoresistiven Elementen 21 um oder im Krafteinleitungsbereich 23 sind jeweils für beide Ausführungsformen des erfindungsgemäßen Silizium-Chips vorstellbar.

In Figur 4 wird ein erfindungsgemäßer Silizium-Chip gezeigt, der nur mit einem Bereich 131 der Unterseite auf dem Gegenlager 38 aufliegt. In Figur 4a ist die Aufsicht mit vier piezoresistiven Elementen um den Krafteinleitungsbereich 23 herum und die Anordnung der Schaltkreise 22 im nicht verbundenen Bereich des Silizium-Chips 20 gezeigt. Die Figur 4b zeigt einen Querschnitt durch den Silizium-Chip 20 entlang der Linie IV-IV. Die piezoresistiven Elemente 21 sind zu beiden Seiten des Krafteinleitungsbereichs 23 derart angeordnet, daß sie noch innerhalb des mit dem Substrat verbundenen Bereichs 131 gelegen sind. Wenn die aus Figur 3 bekannte Anordnung von zwei piezoresistiven Elementen 21 im Krafteinleitungsbereich 23 verwendet wird, so kann der mit dem Substrat verbundene Bereich 131 in seinen Abmessungen dem Krafteinleitungsbereich 23 gleichen. Die Schaltkreise 22 sind auf dem nicht mit dem Substrat verbundenen Bereich 132 des Silizium-Chips angeordnet. Sie liegen somit in einem Bereich, in dem keine mechanischen Deformationen durch die eingeleiteten Kräfte möglich sind. Die Ausgestaltung des hier gezeigten Silizium-Chips 20 erfolgt durch Ätzprozesse auf der Unterseite des Silizium-Chips 20. Die in Figur 4b gezeigte Ausführungsform mit senkrechten Ätzwänden kann beispielsweise durch die Verwendung von Plasmaätzprozessen hergestellt werden, die in Figur 4c dargestellte Variante mit geneigten Wänden wurde in 100 orientierten Siliziumwafern mittels nasschemischer anisotroper Ätzverfahren hergestellt. Die in Figur 4b gezeigte Variante kann auch durch die Verwendung von 110 orientierten Siliziumwafern und nasschemischen Ätzprozessen hergestellt werden, nur sind in diesem Fall die Gräben nicht mehr orthogonal. Der der Figur 4 zugrundeliegende Erfindungsgedanke kann auch durch einen Silizium-Chip nach Figur 2 und ein entsprechend strukturiertes Gegenlager 38 realisiert werden. Der Bereich 131, der mit dem Silizium-Chip 20 und Gegenlager 38 verbunden ist, ist in diesem Fall als Erhebung des Gegenlagers 38 ausgebildet. Bei einem glasartigen Gegenlager 38 kann die Strukturierung durch Ätzprosse, bei metallischen Gegenlagern 38 können ebenfalls Ätzprozesse oder zerspannende Oberflächenbearbeitung verwendet werden. Fertigungstechnisch besonders einfach kann die Erhebung des Gegenlagers 38 des Bereichs 131 auch durch lokales Aufbringen, etwa durch Siebdruck, von Klebstoff für die Verbindung von Silizium-Chip 20 und Gegenlager 38 erfolgen.

In Figur 5 wird ein Silizium-Chip 20 mit einem auf der Unterseite 144, eingebrachten Graben 141 der einen dem Krafteinleitungsbereich 23 gegenüberliegenden Bereich 142 vollständig umfaßt, gezeigt. Figur 5a zeigt eine Aufsicht, die Figuren 5a und 5b zeigen einen Querschnitt der Linie V-V. In der Aufsicht ist der Krafteinleitungsbereich mit vier um den Krafteinleitungsbereich herum angeordneten piezoresistiven Elementen 21 gezeigt. In äquivalenter Weise ist eine Anordnung von zwei piezoresistiven Elementen 21 im Krafteinleitungsbereich 23 denkbar. Krafteinleitungsbereich 23 und piezoresistive Elemente 21 sind von einem rechteckigen Graben 141 umfaßt. In äquivalenter Weise sind auch runde oder anders gestaltete Gräben 141 vorstellbar. Auf der vom Krafteinleitungsbereich 23 abgewandten Seite des Grabens 141 ist ein spannungsarmer Bereich 143 gelegen, in dem die Schaltkreise 22 angeordnet sind. Der in Figur 5b gezeigte Querschnitt zeigt einen Graben 141 mit einem rechteckigen Querschnitt. Dieser Graben 141 wurde durch die Anwendung von anisotropen Plasmaätzprozessen erzeugt. Da diese Ätzprozesse unabhängig von der Kristallorientierung des Siliziums sind, können mit diesen Ätzprozessen auch in der Aufsicht kreisförmige Grabengeometrien hergestellt werden. In der Figur 5c wird ein Querschnitt durch einen Silizium-Chip 20 mit einer 100 Orientierung gezeigt, in dem der Graben 141 durch nasschemische anisotrope Ätzprozesse erzeugt wurde. Der trapezförmige Querschnitt des Grabens 141, dessen schräge Seitenwände einen Winkel von ca. 70,5° miteinander bilden, werden durch zeitliche Kontrolle der Ätztiefe oder durch die Verwendung einer Ätzstopschicht auf der Oberseite des Siliziumwafers erreicht. Durch die hier gezeigten Gräben 141 wird eine gute mechanische Entkopplung der Schaltkreise 22 vom Krafteinleitungsbereich 23 erreicht. Da die Bereiche 143, auf denen die Schaltkreise 22 angeordnet sind, mechanisch jedoch mit dem Gegenlager 38 verbunden sind, kann die in den Schaltkreisen 22 entstehende Wärme gut über das Gegenlager 38 abgeführt werden.

In der Figur 6 ist eine verbesserte Ausgestaltung des in Figur 5 gezeigten Silizium-Chips 20 dargestellt. Die Figuren 6a und 6b stellen jeweils einen Querschnitt entlang der Linie V-V dar. Die in Figur 6 gezeigten Silizium-Chips 20 weisen, neben dem bereits aus Figur 5 bekannten Graben 141, zusätzlich noch eine Ausnehmung 145 auf der Unterseite des Silizium-Chips 20 auf. Die Ausnehmung 145 liegt dem Krafteinleitungsbereich 23 gegenüber und weist in etwa die gleiche geometrische Form auf. Durch die Ausnehmung 145 wird die Fläche von Silizium-Chip 20 und Gegenlager 38 die vom Graben 141 umfaßt wird, verringert. Die in den Krafteinleitungsbereich 23 eingeleiteten mechanischen Kräfte werden dadurch über eine verringerte Fläche an das Gegenlager 38 abgegeben. Die damit verbundene Spannungskonzentration im Bereich der piezoresistiven Elemente 21 führt zu einem stärkeren Signal der piezoresistiven Elemente 21. Die in Figur 6a gezeigte Ausgestaltung mit Gräben 141 und einer Ausnehmung 145 mit rechteckigem Querschnitt wird durch die Verwendung von anisotropen Plasmaätzprozessen hergestellt. Da, wie hier gezeigt, der Graben 141 eine andere Tiefe aufweist als die Ausnehmung 145, muß dieser Ätzprozes in zwei Schritten erfolgen. Die in Figur 6b gezeigte Ausgestaltung mit trapezförmigen Äzgräben in 100 orientiertem Silizium erfolgt durch die Verwendung von nasschemischen anisotropen Ätzprozessen. Da der Graben 141 und die Ausnehmung 145 die gleiche Tiefe aufweisen, erfolgt die Herstellung in einem Ätzschritt. Bei der Verwendung von Gräben 141 oder Ausnehmungen 145 mit dreieckigem Querschnitt können, da die Ätztiefe von dreieckigen Gräben in 100 Silizium im wesentlichen von der Grabenbreite abhängt, auch unterschiedliche Tiefen in einem Ätzschritt realisiert werden.

In Figur 7 ist ein Silizium-Chip 20 gezeigt, der nur mit einem Randbereich 161 mit dem Gegenlager 38 verbunden ist. Figur 7a zeigt eine Aufsicht, Figur 7b und Figur 7c zeigen jeweils ein Schnitt entlang der Linie VII-VII. Wie in der Aufsicht zu sehen ist, sind die piezoresistiven Elemente 21 zwischen dem Krafteinleitungsbereich 23 und dem mit dem Gegenlager 38 verbundenen Bereich 161 gelegen. Die Schaltkreise 22 sind auf der anderen Seite des Krafteinleitungsbereichs 23 auf dem nicht mit dem Substrat verbundenen Bereich 163 angeordnet. Die piezoresistiven Elemente sind auf einer Meßlinie 24 angeordnet, wobei die Meßlinie 24 mit der Grenze 164 zwischen dem mit dem Gegenlager 38 verbundenen Bereich 161 und dem nicht verbundenen Bereich 163 identisch ist. Zwei der vier piezoresistive Elemente 21 sind dabei mit ihrer Längsrichtung auf der Meßlinie angeordnet, zwei sind quer dazu angeordnet. Durch die Querschnittszeichnung 7b und 7c wird die Anordnung der piezoresistiven Elemente 21 auf der Grenze 164 verständlich. Durch Einleiten einer Kraft auf dem Krafteinleitungsbereich 23 wird das nicht verankerte Teil 163, das in seiner Dicke verringert ist, in Richtung auf das Gegenlager 38 verbogen. Die größte mechanische Deformation und somit auch die größten mechanischen Spannungen treten dabei auf der Grenze 164 zwischen dem verankerten Bereich 161 und dem nicht verankerten Bereich 163 auf. Der nicht mit dem Gegenlager 38 hin verbundene Bereich 163 ist nahezu keiner mechanischen Spannungen ausgesetzt. Die Schaltkreise 22 sind daher auf dem nicht verankerten Bereich 163 angeordnet. Das in Figur 7b gezeigte Ausführungsbeispiel mit einer senkrechten Wand zwischen dem verbundenen Bereich 161 und dem nicht verbundenen Bereich 163 kann sowohl durch nasschemisches anisotropes Ätzen in 110 Silizium wie auch anisotropen Plasmaätzprozessen hergestellt werden. Das in Figur 7c gezeigte Ausführungsbeispiel mit einer geneigten Wand zwischen dem verbundenen Bereich 161 und dem nicht verbundenen Bereich 163 wurde durch nasschemische anisotrope Ätzung in 100 Silizium hergestellt. Als Grenze 164 zwischen diesen beiden Bereichen wird dabei das obere Ende des schrägen Übergangsbereichs verstanden.

In der Figur 8a wird die Aufsicht und in den Figuren 8b und 8c wird ein Querschnitt entlang der Linie VIII-VIII eines Silizium-Chips gezeigt. In der Aufsicht erkennt man, daß der Krafteinleitungsbereich 23 auf der Unterseite 171 von einem Graben 172 mit ca. 270° umfaßt wird. Im Querschnitt, beispielsweise in Figur 8b, sieht man, daß der vom Graben 172 umfaßte Bereich 173 in seiner Dicke verringert ist. Auf diese Weise wird der Silizium-Chip 20 im Krafteinleitungsbereich 23 als Biegebalken ausgebildet. Der so gebildete Biegebalken ist einseitig am nicht vom Graben 172 umfaßten Bereich 174 verankert. Im Bereich der Verankerung sind auch die piezoresistiven Elemente 21 auf einer Meßlinie 24 angeordnet. Damit die in den piezoresistiven Elementen 21 auftretenden mechanischen Spannungen groß sind, sollte die Restdicke des Silizium-Chips über dem Graben 172 gering sein. Die Schaltkreise 22 sind auf der vom Krafteinleitungsbereich 23 abgewandten Seite des Grabens 172 angeordnet. In diesem Bereich sind die mechanischen Spannungen des Silizium-Chips minimal. Das Ausführungsbeispiel nach Figur 8b wurde durch die Verwendung von anisotropen Plasmaätzprozessen hergestellt. Dementsprechend sind die Wände des Grabens 172 bzw. der Ausnehmung 175 nahezu senkrecht zur Oberfläche des Silizium-Chips 20. Das Ausführungsbeispiel in Figur 8c wurde in 100 Silizium unter Verwendung anisotroper nasschemischer Ätzprozesse erzeugt.

In Figur 9a wird in der Aufsicht ein Silizium-Chip 20 mit zwei auf der Unterseite 183 eingebrachten parallelen Gräben 181 gezeigt. Zwischen den beiden Gräben 181 ist der Krafteinleitungsbereich 23 gelegen. Der Silizium-Chip 20 ist zwischen den beiden Gräben 181 durch eine Ausnehmung 185 auf der Unterseite 183 in seiner Dicke verringert. Auf den beiden Grenzen 184 zwischen dem in seiner Dicke verringerten Bereich 185 des Silizium-Chips 20 und dem restlichen Bereich des Silizium-Chips liegen jeweils zwei piezoresistive Elemente 21. Von diesen piezoresistiven Elementen 21 ist jeweils eins mit seiner Längsrichtung zum Krafteinleitungsbereich 23 hin und eines quer dazu orientiert. Die Schaltkreise 22 liegen auf der vom Krafteinleitungsbereich 23 abgewandten Seite der Gräben 181. Der in seiner Dicke verringerte Bereich 185 des Silizium-Chips 20 stellt einen zweiseitig eingespannten Biegebalken dar. Wenn eine Kraft auf den Krafteinleitungsbereich 23 wirkt, so treten die größten mechanischen Spannungen an den Einspannstellen dieses Biegebalkens auf.

An diesen Stellen sind die piezoresistiven Elemente 21 angeordnet. Damit dieser Silizium-Chip 20 die mechanische Verspannungen in den piezoresistiven Elementen 21 konzentriert und die Schaltkreise 22 in einem spannungsarmen Bereich liegen, sollte die Restdicke des Silizium-Chips 20 über den Gräben 181 relativ gering sein. Die Schaltkreise 22 stehen in gutem thermischen Kontakt mit dem Gegenlager 38. Figur 9b zeigt einen Schnitt entlang der Linie IX-IX. Die hier gezeigten Gräben weisen einen rechteckigen Querschnitt auf und sind durch anisotrope Plasmaätzprozesse im Silizium-Chip 20 erzeugt. Figur 9c zeigt ebenfalls einen Schnitt entlang der Linie IX-IX, wobei hier die Gräben 181 und die Ausnehmung 182 durch anisotropes nasschemisches Ätzen in 100 Silizium erzeugt wurden.

## Patentansprüche

1. Silizium-Chip zur Verwendung in einem Kraftsensor, vorzugsweise zur Messung des Drucks im Brennraum von Brennkraftmaschinen, mit mindestens einem piezoresistiven Element (21) und Schaltkreisen (22) zur Auswertung der Signale des mindestens einen piezoresitiven Elements (21), mit einem Krafteinleitungsbereich (23) auf den ein Stempel (18) drückbar ist, dadurch gekennzeichnet, daß das mindestens eine piezoresistive Element (21) in einem Bereich hoher mechanischer Spannung und die Schaltkreise (22) in einem Bereich geringer mechanischer Spannung angeordnet sind.

2. Silizium-Chip nach Anspruch 1, dadurch gekennzeichnet, daß der Chip (20) vier piezoresistive Elemente (21) mit einer durch die Kontaktierung vorgegebenen Längsrichtung aufweist, die um den Krafteinleitungsbereich (23) herum angeordnet sind, von denen zwei mit ihrer Längrichtung zum Krafteinleitungsbereich (23) hin und zwei quer dazu orientiert sind.

3. Silizium-Chip nach Anspruch 1, dadurch gekennzeichnet, daß der Chip zwei piezoresistive Elemente (21) mit einer durch die Kontaktierung vorgegebenen Längsrichtung aufweist, die mit ihrer Längsrichtung in dieselbe Richtung weisend im Krafteinleitungsbereich (23) angeordnet sind.

4. Silizium-Chip nach Anspruch 1, dadurch gekennzeichnet, daß der Chip vier piezoresistive Elemente (21) mit einer durch die Kontaktierung vorgegebenen Längsrichtung aufweist, die auf einer Meßlinie (24) angeordnet sind, wobei zwei der piezoresistiven Elemente (21) mit ihrer Längsrichtung auf der Meßlinie (24) und zwei quer dazu orientiert sind.

5. Silizium-Chip nach einem der Ansprüche 1 bis 4, dadurch gekennzeichnet, daß der Chip (20) aus einem massiven Stück Silizium (100) besteht, und daß der Krafteinleitungsbereich (23) in der Mitte und die Schaltkreise (22) am Rand des Chips angeordnet sind.

6. Silizium-Chip nach einem der vorhergehenden Ansprüche 1 bis 4, dadurch gekennzeichnet, daß in die Oberseite (121) des Silizium-Chips (20) mindestens ein Graben (122) eingebracht ist, und daß die Schaltkreise (22) der auf vom Krafteinleitungsbereich (23) abgewandten Seite des Grabens (122) liegen.

7. Silizium-Chip nach einem der vorhergehenden Ansprüche 1 bis 4, dadurch gekennzeichnet, daß der Silizium-Chip (20) auf der Unterseite (132) nur in einem Bereich (131) der dem Krafteinleitungsbereich (23) gegenüberliegt auf dem Gegenlager (138) aufliegt, und daß die Schaltkreise (22) nicht in diesem Bereich (131) liegen.

8. Silizium-Chip nach einem der Ansprüche 1 bis 4 , dadurch gekennzeichnet, daß der Silizium-Chip (20) auf der Unterseite (144) einen Graben (141) aufweist, daß dieser Graben (141) um einem dem Krafteinleitungsbereich (23) gegenüberliegenden Bereich (142) der Unterseite (144) herum angeordnet ist und ihn vollständig umschließt, und das die Schaltkreise (22) auf dem nicht umschlossenen Bereich (143) angeordnet sind.

9. Silizium-Chip nach Anspruch 8, dadurch gekennzeichnet, daß der umschlossene Bereich (142) in der Mitte von der Unterseite (144) ausgehend eine Ausnehmung (145) aufweist.

10. Silizium-Chip nach Anspruch 4, dadurch gekennzeichnet, daß der Silizium-Chip (20) auf der Unterseite nur mit einem am Rand gelegenen Bereich (161) auf einem Gegenlager (162) verbunden ist, daß der nicht verbundene Bereich (163) dünner ist als der verbundene Bereich (161), daß die Grenze (164) zwischen beiden Bereichen (161,163) eine Gerade ist, daß sich die Meßlinie (24) auf der Grenze (164) erstreckt, und daß die Schaltkreise (22) auf dem nicht verbundenen Bereich (163) angeordnet sind.

11. Silizium-Chip nach Anspruch 4, dadurch gekennzeichnet, daß der Silizium-Chip (20) auf einer Unterseite (171) einen Graben (172) aufweist, daß dieser Graben (172) um einen dem Krafteinleitungsbereich (23) gegenüberliegenden Bereich (173) der Unterseite (171) herum angeordnet ist und ihn mit ca. 270° umfaßt, daß dieser Bereich (173) des Silizium-Chips (20) in seiner Dicke durch eine Ausnehmung (175) auf seiner Unterseite (171) verringert ist, daß sich die Meßlinie (24) auf der Grenze zwischen diesem Bereich (173) und dem nicht vom Graben (172) umfaßten Bereich erstreckt, und daß die Schaltkreise (22) auf der auf vom Krafteinleitungsbereich (23) abgewandten Seite des Grabens (172) liegen.

12. Silizium-Chip nach Anspruch 1, dadurch gekennzeichnet, daß der Silizium-Chip (20) auf der Unterseite (183) zwei parallele Gräben (181) aufweist, daß der Krafteinleitungsbereich (23) zwischen diesen Gräben (181) liegt, daß ein Bereich (185) des Silizium-Chips (20) zwischen den Gräben (181) in seiner Dicke durch eine Ausnehmung (182) auf seiner Unterseite (183) verringert ist, daß jeweils zwei piezoresistive Elemente (21) mit einer durch die Kontaktierung vorgegebenen Längsrichtung auf den beiden Grenzen (184) zwischen dem in seiner Dicke verringerten Bereich (185) des Silizium-Chips (20) und dem restlichen Bereich des Silizium-Chips liegen, daß jeweils eins dieser piezoresistiven Elemente (21) mit seiner Längsrichtung zum Krafteinleitungsbereich (23) hin orientiert ist und eins quer dazu, und daß die Schaltkreise (22) auf der vom Krafteinleitungsbereich (23) abgewandten Seite der Gräben (181) liegen.

## Claims

1. Silicon chip for use in a force-detection sensor, preferably for measuring the pressure in the combustion chamber of internal combustion engines, having at least one piezoresistive element (21) and circuits (22) for evaluating the signals of the at least one piezoresistive element (21), having a force-application area (23) on which a plunger (18) can be pressed, characterized in that the at least one piezoresistive element (21) is arranged in an area of high mechanical stress and the circuits (22) are arranged in an area of low mechanical stress.

2. Silicon chip according to Claim 1, characterized in that the chip (20) has four piezoresistive elements (21) with a longitudinal direction which is prescribed by the contacts, the said piezoresistive elements (21) being arranged around the force-application area (23), and two of them being oriented with their longitudinal direction towards the force-application area (23) and two transversely thereto.

3. Silicon chip according to Claim 1, characterized in that the chip has two piezoresistive elements (21) with a longitudinal direction which is prescribed by the contacts, the said piezoresistive elements (21) being arranged in the force-application area (23) with their longitudinal direction pointing in the same direction.

4. Silicon chip according to Claim 1, characterized in that the chip has four piezoresistive elements (21) with a longitudinal direction prescribed by the contacts, the said piezoresistive elements (21) being arranged on a measurement line (24), two of the piezoresistive elements (21) being oriented with their longitudinal direction on the measurement line (24) and two transversely thereto.

5. Silicon chip according to one of Claims 1 to 4, characterized in that the chip (20) consists of a solid piece of silicon (100), and in that the force-application area (23) is arranged in the centre and the circuits (22) are arranged at the edge of the chip.

6. Silicon chip according to one of the preceding Claims 1 to 4, characterized in that at least one trench (122) is provided in the upper side (121) of the silicon chip (20), and in that the circuits (22) are located on the side of the trench (122) facing away from the force-application area (23).

7. Silicon chip according to one of the preceding Claims 1 to 4, characterized in that the silicon chip (20) fits on the underside (132) on the counterbearing (138) exclusively in an area (131) which lies opposite the force-application area (23), and in that the circuits (22) are not located in this area (131).

8. Silicon chip according to one of Claims 1 to 4, characterized in that the silicon chip (20) has on the underside (144) a trench (141), in that this trench (141) is arranged around an area (142), lying opposite the force-application area (23), of the underside (144) and completely surrounds it, and that the circuits (22) are arranged on the non-surrounded area (143).

9. Silicon chip according to Claim 8, characterized in that the surrounded area (142) has a recess (145) in the centre starting from the underside (144).

10. Silicon chip according to Claim 4, characterized in that the silicon chip (20) is connected on the underside exclusively to an area (161), located at the edge, on a counterbearing (162), in that the non-connected area (163) is thinner than the connected area (161), in that the boundary (164) between the two areas (161, 163) is a straight line, in that the measurement line (24) extends on the boundary (164), and in that the circuits (22) are arranged on the non-connected area (163).

11. Silicon chip according to Claim 4, characterized in that the silicon chip (20) has a trench (172) on an underside (171), in that this trench (172) is arranged around an area (173), lying opposite the force-application area (23), on the underside (171), and encloses it by approximately 270°, in that this area (173) of the silicon chip (20) is reduced in thickness by a recess (175) on its underside (171), in that the measurement line (24) extends on the boundary between this area (173) and the area not enclosed by the trench (172), and in that the circuits (22) are located on the side of the trench (172) facing away from the force-application area (23).

12. Silicon chip according to Claim 1, characterized in that the silicon chip (20) has two parallel trenches (181) on the underside (183), in that the force-application area (23) is located between these trenches (181), in that an area (185) of the silicon chip (20) between the trenches (181) is reduced in thickness by a recess (182) on its underside (183), in that in each case two piezoresistive elements (21) are located with a longitudinal direction, prescribed by the contacts, on the two boundaries (184) between the area (185), which is reduced in thickness, of the silicon chip (20) and the remaining area of the silicon chip, in that in each case one of these piezoresistive elements (21) is oriented with its longitudinal direction towards the force-application area (23) and one transversely thereto, and in that the circuits (22) are located on the side of the trenches (181) facing away from the force-application area (23).

## Revendications

1. Puce de silicium utilisable dans un capteur de force, de préférence pour mesurer la pression dans la chambre de combustion de moteurs à combustion interne, avec au moins un élément piézorésistif (21) et des circuits de commutation (22) pour exploiter les signaux de l'un au moins des éléments piézorésistifs (21), ainsi qu'avec une zone d'application des forces (23) sur laquelle peut appuyer un poinçon (18), puce de silicium caractérisée en ce que l'un au moins des éléments piézorésistifs (21) est disposé dans une zone où les contraintes mécaniques sont élevées, et en ce que les circuits de commutation (22) sont disposés dans une zone où les contraintes mécaniques sont faibles.

2. Puce de silicium selon la revendication 1, caractérisée en ce que la puce (20) présente quatre éléments piézorésistifs (21) avec un sens longitudinal prédéfini par la mise en contact, éléments qui sont disposés autour de la zone d'application des forces (23), deux d'entre eux étant orientés par leur sens longitudinal en direction de la zone d'application des forces (23), et les deux autres étant orientés perpendiculairement à cela.

3. Puce de silicium selon la revendication 1, caractérisée en ce que la puce présente deux éléments piézorésistifs (21) avec un sens longitudinal prédéfini par la mise en contact, qui sont disposés par leur sens longitudinal dans ce même sens orienté dans la zone d'application des forces (23).

4. Puce de silicium selon la revendication 1, caractérisée en ce que la puce présente quatre éléments piézorésistifs (21) avec un sens longitudinal prédéfini par la mise en contact, qui sont disposés sur une ligne de mesure (24), deux des éléments piézorésistifs (21) étant orientés par leur sens longitudinal sur la ligne de mesure (24), et les deux autres perpendiculairement.

5. Puce de silicium selon l'une des revendications 1 à 4, caractérisée en ce que la puce (20) consiste en une pièce massive de silicium (100) et en ce que la zone d'application des forces (23) est disposée au milieu tandis que les circuits de commutation (22) sont disposés sur le bord de la puce.

6. Puce de silicium selon l'une des revendications précédentes 1 à 4, caractérisée en ce que dans la face supérieure (121) de la puce de silicium (20) on pratique au moins une rainure (122), et en ce que les circuits de commutation (22) se trouvent sur la face de la rainure (122) située à l'opposé de la zone d'application des forces (23).

7. Puce de silicium selon l'une des revendications précédentes 1 à 4, caractérisée en ce que la puce de silicium (20) repose seulement dans une zone (131) qui se trouve en regard de la zone d'application des forces (23), et en ce que les circuits de commutation (22) ne se trouvent pas dans cette zone (131).

8. Puce de silicium selon l'une des revendications précédentes 1 à 4, caractérisée en ce que la puce de silicium (20) présente sur la face inférieure (144) une rainure (141), en ce que cette rainure (141) est disposée autour d'une zone (142) de la face inférieure (144) qui se trouve en face de la zone d'application des forces (23) et l'entoure complètement, et en ce que les circuits de commutation (22) sont disposés sur la zone non entourée (143).

9. Puce de silicium selon la revendication 8, caractérisée en ce que la zone entourée (142) présente dans le milieu, en partant de la face inférieure (144), un évidement (145).

10. Puce de silicium selon la revendication 4, caractérisée en ce que la puce de silicium (20) est reliée sur la face inférieure seulement à une zone située sur le bord (161) sur un support (162), en ce que la zone non reliée (163) est plus mince que la zone reliée (161), en ce que la limite (164), entre les deux zones (161, 163) est une ligne droite, en ce que la ligne de mesure (24) s'étend sur la limite (164), et en ce que les circuits de commutation (22) sont disposés sur la zone non reliée (163).

11. Puce de silicium selon la revendication 4, caractérisée en ce que la puce de silicium (20) présente sur une face inférieure (171) une rainure (172), en ce que cette rainure (172) est disposée autour d'une zone (173) de la face inférieure (171) se trouvant en face de la zone d'application des forces (23) et l'entoure d'environ 270°, en ce que cette zone (173) de la puce de silicium (20) a une épaisseur réduite par un évidement (175), dans sa face inférieure (171), en ce que la ligne de mesure (24) s'étend sur la limite entre cette zone (173) et la zone non entourée par la rainure (172), et en ce que les circuits de commutation (22) se trouvent sur le côté de la rainure (172) qui est situé à l'opposé de la zone d'application des forces (23).

12. Puce de silicium selon la revendication 1, caractérisée en ce que la puce de silicium (20) présente sur la face inférieure (183) deux rainures parallèles (181), en ce que la zone d'application des forces (23) se trouve entre ces rainures (181), en ce qu'une zone (185) de la puce de silicium (20) entre les rainures (181) a son épaisseur réduite par un évidement (182) sur sa face inférieure (183), en ce que respectivement deux éléments piézo-résistifs (21) se trouvent, avec un sens longitudinal prédéfini par la mise en contact, sur les deux limites (184) entre la zone (185) de la puce de silicium (20) qui a une épaisseur réduite, et la zone résiduelle de la puce de silicium, en ce que respectivement l'un de ces éléments piézorésistifs (21) est orienté avec son sens longitudinal en direction de la zone d'application des forces (23), et l'autre perpendiculairement et en ce que les circuits de commutation (22) reposent sur le côté des rainures (181) situé à l'opposé de la zone d'application des forces (23).
